# EUROPEAN PATENT APPLICATION

(11) **EP 2 881 562 A1**
(43) Date of publication of application: **10.06.2015**
(21) Application number: 13195406.7
(22) Date of filing: 03.12.2013
(51) Int. Cl.: F02C 7/10, F28D 15/02, F02C 7/08

(54) **Gas turbine with intake air preheating system**

(71) Applicant: ALSTOM Technology Ltd, 5400 Baden (CH)
(72) Inventor: Drouvot, Paul, 68128 Village-Neuf (FR); Denhez, Maxime, 54000 Nancy (FR)
(74) Representative: Alstom Technology Ltd

(57) **Abstract**

Gas turbine (10) comprising an air intake (9), a compressor (1), a combustor (2), a turbine (3) and an intake air preheating system (8) comprising at least one, preferably more than one, heat pipes (13).

## Description

The present invention relates to a gas turbine with an intake air preheating system.

Parallel to the requirements regarding the performance and efficiency of such gas turbines, the requirements are more and more increasing as regards operation at low part load during periods of low electricity demand and/or at low ambient temperatures.

Basically, gas turbines and gas turbine combined cycle power plants are considered as very flexible in load. They are fast in load following as well as in the case of a start-up. However, if the current gas turbines are operated in particular at a very low part load, there are problems as regards the environment compliance and in view of the sufficient cooling of turbine parts and a stable combustion in the combustor. When such gas turbines are operated at a very low part load with the variable inlet guide vanes closed or almost closed, the hot gas temperature drops and premixed combustion stability is therefore limited.

In the prior art, gas turbines with an intake air preheating system have been known, which comprise a tubular heat exchanger upstream or inside the air intake of the gas turbine to raise the temperature of the intake air.

Preheating the intake air of a gas turbine can be used for different purposes, such as anti-icing, low temperature operation, increase of the efficiency part low, lower CO/NOx emissions in part load.

By raising the temperature of the intake air various problems, caused by the low load operation, can be avoided or at least significantly reduced. Among other positive effects mixing of fuel and compressed air is improved and a more stable combustion is achieved.

Heat exchangers for preheating the intake air cause a flow resistance for the intake air reducing the efficiency of the gas turbine. Further the temperature of the tubes of the heat exchanger varies along their length. This results in locally varying temperatures of the preheated intake air, which has to be avoided.

In view of the above issues, it is an object of the present invention to provide a gas turbine as well as a method for operating a gas turbine at very low loads that overcomes the deficiencies of the prior art.

This problem is solved by a gas turbine having the features of claim 1. Preferred embodiments and further developments of the invention are defined in the dependent claims.

This object is achieved by means of a gas turbine comprising an air intake, a compressor, a combustor, a turbine and an intake air preheating system, wherein the intake air preheating system comprises at least one, preferably more than one, heat-pipes for preheating the intake air.

Using heat pipes to transfer the heat from a heat source to the intake air has, amongst others, the following advantages:
Heat pipes transfer heat at a constant temperature. Therefore, a nearly isothermal heat exchange across the whole air intake area of the gas turbine is achieved. This means, that the preheated intake air of the gas turbine has to a great extent the same temperature all over the cross section of the air intake.

As a result, any of the burners of the gas turbine is operated under the same conditions and therefore can be operated with highest efficiency and low NOx and CO emissions. Further, the control of the burners is easier, since one control signal is sufficient for all burners and the need to individually control each of the burners is reduced.

Further, the heat transfer performance of heat pipes is very high. As a result, compared to a tubular heat exchanger the heat pipes have a reduced size and therefore the pressure drop of the intake air that flows around the heat pipes is smaller than the pressure drop of the intake air that flows through a tubular heat exchanger with the same heat transfer capacity. The reduced pressure drop raises the overall efficiency of the gas turbine. Further the design of the claimed intake air preheating system with heat pipes is very compact.

A further advantage is the fact, that heat pipes do not require a pump or anything else to transport the heat transferring fluid from the warm side of the heat pipe to the cold side of the heat pipe. This means that heat pipes do not require external power to operate and are more or less maintenance-free.

Since quite a number of heat pipes is used for preheating the intake air and each heat pipe operates as a "stand-alone" heat transfer means, there is a great intrinsic redundancy, since in case one of the heat pipes gets a defect and does not work anymore, neither other heat pipes nor the operation of the gas turbine is influenced.
It is hereby possible to run the gas turbine also at very low loads, in particular at loads of 15 percent stable load or even below and at the same time with very low NOx and CO emissions. In a preferred embodiment of the claimed invention the cold end of each heat pipe ends inside the air intake of the gas turbine and the hot ends of the heat pipes are arranged outside the air intake of the gas turbine.

Doing so, it is possible to transfer heat to the hot end of the heat pipe in different ways without influencing the operation of the gas turbine.

The hot end of the heat pipe is the end where heat from an external heat source is transferred into the heat pipes.

This means that it is possible to use any internal or external heat source, like live steam, hot water, exhaust gas of the turbine, internal or external waste heat or heat from the cooling air that is used to cool certain components, like blades and vanes, of the turbine. By using waste heat for the intake air preheating is possible to further improve the efficiency of the gas turbine at low load.

It is possible and sometimes advantageous to heat the hot ends of the heat pipes by means of an electric heating element. This is advantageous, especially if the preheating of the intake air takes place at very low load of the gas turbine, since the electric heating raises the electric load and therefore helps to operate the gas turbine, even if the demand of the electric grid is very low. The electrical preheating of the intake air is an internal load that adds to the external load of the grid.

The term "heat pipe" may comprise different designs, like for example thermo siphon heat pipes, wicked heat pipes, thermo siphon loop heat pipes or wicked loop heat pipes. Any of these designs are suitable for use with the claimed invention.

Since these different types of heat pipes are very flexible with regard to their design, their cold ends may be located at the gas turbine plant wherever there is sufficient space and thermal energy available. Therefor the claimed invention may be used as a retrofit solution for existing gas turbines.

Further advantages of the claimed invention are: The walls of the heat pipes are nearly isothermal, because two phase changes take place in each heat pipe under an almost constant pressure. As a result, the intake air gets in contact with a constant tube wall temperature of the heat pipes.

This is an important difference to a tubular heat exchanger, where a temperature gradient along the tube length occurs. This temperature gradient along the tube length causes non-isothermal temperatures across the air intake, which may lead to sub-optimal combustion of compressed air and fuel in different burners of the gas turbine.

By choosing an appropriate working fluid and an appropriate operating pressure inside the heat pipe, the heat pipes have a self-protection against freezing conditions.

This means, that the liquid part of the heat pipes does not freeze, even if the ambient temperature is far below 0° C.

Since heat pipes do not have any moving parts, bearings or seals, heat pipes require nearly no maintenance. It is further possible to have the transportation of the heat transferring liquid from the hot end to the cold end of the heat pipe supported by the earth gravity.

Since heat pipes use the latent heat of vaporization and condensation of the working fluid to transport a given amount of heat, less circulation mass flow is required compared to a heat transport based on sensible heat, which is the case for the state of the art tubular heat exchangers.

Further, due to the high heat transfer coefficient on the inner surface of the heat pipe (vaporization/condensation), the temperature level of the heat source can be reduced. As a result, the efficiency of the gas turbine is increased.

The preheater system may, for example, be arranged at an air intake prior to an air filter of the air intake

The present invention is not limited to the gas turbine illustrated and explained in conjunction with the drawing, but may be used in any gas turbine or gas turbine combined cycle power plant with intake air preheating.

A sufficiently high temperature of gases in the combustion chamber for a stable combustion is hereby achieved also in situations of an operation of the gas turbine in a very low part load, e.g. a load of only 15 percent or below the nominal load of the gas turbine. This is also efficient with regard to environmental compliances, i.e. it leads to low NOx and low CO emissions.

In the following, the invention of the present application will be described in more detail by means of several embodiments of the invention and with reference to the attached drawing, in which:
- Fig. 1: is a schematic view of a first embodiment of the gas turbine according to the present invention with an air pre-heater system and
- Fig. 2: is a schematic front view of an air filter equipped with heat pipes.

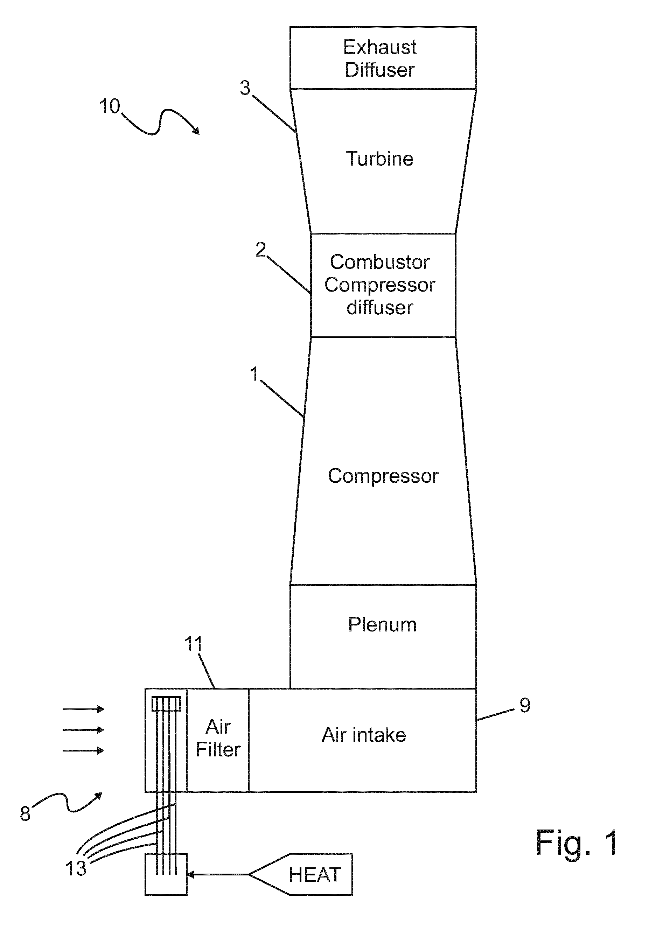

Figure 1 shows in a schematic view an embodiment of the gas turbine according to the invention, comprising a pre-heater system 8 for the inlet air of a compressor 1.

The gas turbine 10 basically comprises a compressor 1, a combustor 2 and a turbine 3, an air intake 9 and an air filter 11. The gas turbine 10 is in this embodiment furthermore provided with a preheater system 8 upstream of an air intake 9.

The preheater system 8 serves to heat the inlet air in particular in a part load operation modus of the gas turbine 10 and/or at low ambient temperature.

The gas turbine 10 according to the invention uses heat pipes 13 to preheat the intake air before entering the compressor 1. The heat pipes 13 do not need an external pump or the like. Therefor the arrangement is rather simple and needs nearly no service. Since each heat pipe 13 operates independent from the other heat pipes, the claimed air preheating system 8 operates even if some the heat pipes 13 fail.

Depending on the requested temperature of the preheated intake air and/or the temperature of available heat source the working liquid of the heat pipes 13 and their operating pressure may be chosen. For the claimed invention water alone or in combination with ammonia and or alcohol are preferred.

Heat pipes 13 using water as working fluid may be made with an envelope of copper and may be operated in the temperature range of 20 to 150°C.

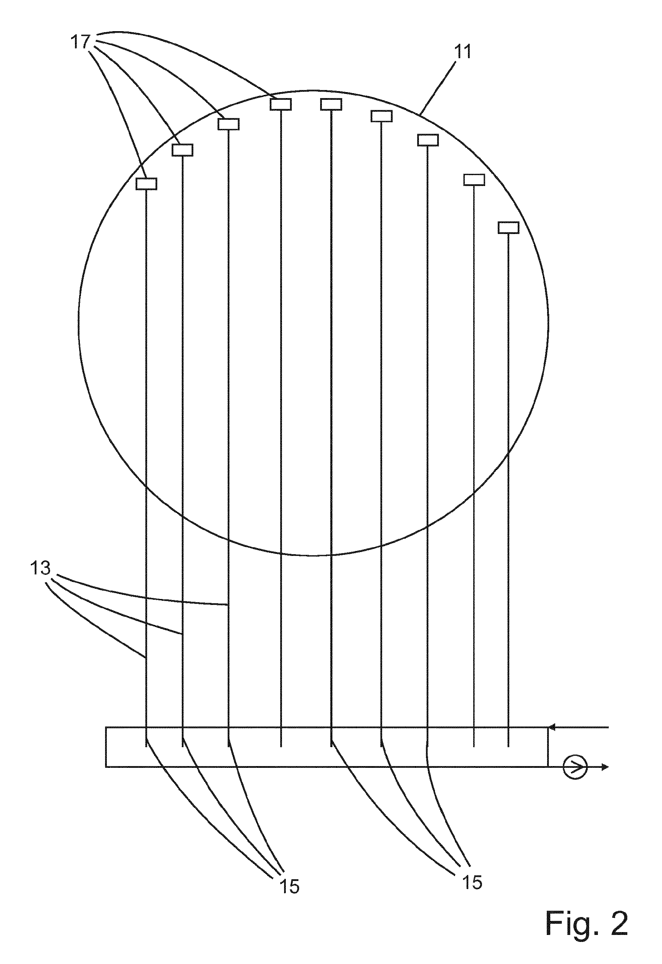

Figure 2 illustrates a front view of an air filter 11 equipped with heat pipes 13 for preheating the intake air.
In this embodiment the heat pipes 13 are supplied with heat on their warm ends 15, which is arranged outside of the air filter 11. At the warm end for example live steam or hot water may be used to evaporate the working liquid inside the heat pipes 13 and thereby transferring heat to the working liquid (not shown). As soon as the working liquid inside the heat pipes 13 has become gaseous, it moves towards the cold ends 17 of the heat pipes 13 thereby transferring heat to the intake air that flows around the section of the heat pipes 13 inside the air filter 11.

Since the intake air has a lower temperature than the working liquid, heat is transferred from the heat pipes 13 to the intake air.

At the cold ends 17 of the heat pipes 13 the working liquid again changes its phase from gaseous to liquid. The temperatures of the hot end 15 and the cold end 17 differs only very little, for example about 6 K or even less.

Due to this little temperature difference the heat is transferred nearly isothermally from the heat pipes 13 to the intake air. This results in very homogenous temperature distribution of the intake air after preheating.

A further advantage of the little temperature difference is the fact that the thermal energy supplied to the heat pipes 13 at their warm end may have a rather low temperature, only a little bit higher than the working liquid inside the heat pipes. Compared to conventional air preheaters with tubular heat exchangers the thermal energy supplied to the heat pipes 13 may have a significantly lower temperature than the heat required for supplying a tubular heat exchanger.

### List of reference numerals:

- 1: compressor
- 2: combustor
- 3: turbine
- 8: pre-heater system
- 9: air intake
- 10: gas turbine
- 11: air filter
- 13: heat pipe
- 15: warm end
- 17: cold end

## Claims

1. Gas turbine (10) comprising an air intake (9), a compressor (1), a combustor (2), a turbine (3) and an intake air preheating system (8), **characterized in that** the intake air preheating system (8) comprises at least one, preferably more than one, heat-pipes (13).

2. Gas turbine (10) according to claim 1, **characterized in that** a warm end (15) of the at least one heat pipe (13) is arranged outside the air intake (9) of the gas turbine (10).

3. Gas turbine (10) according to claim 1 or 2, **characterized in that** a cold end (17) of the at least one heat pipe (13) is arranged inside the air intake (9) of the gas turbine (10).

4. Gas turbine (10) according to one of the preceding claims, **characterized in that** the intake air preheating system (8) comprises heat transfer means at the warm end (15) transferring sensible heat from a heat source to the working liquid of the heat pipes (13).

5. Gas turbine (10) according to claim 4, **characterized in that** the heat transfer system comprises a pump for the heat transfer medium.

6. Gas turbine (10) according to one of the preceding claims, **characterized in, that** the intake air preheating system (8) comprises an electrical heater for supplying heat to the at least one heat pipe (13).

7. Gas turbine (10) according to one of the preceding claims, **characterized in, that** the heat pipes (13) are thermo siphon heat pipes, wicked heat pipes, thermo siphon loop heat pipes or wicked loop heat pipes.

8. Gas turbine (10) according to one of the preceding claims, **characterized in, that** the heat pipes (13) use water alone or in combination with ammonia and/or alcohol as working liquid.
